# EUROPÄISCHE PATENTSCHRIFT

(11) **EP 0 499 582 B1**
(45) Veröffentlichungstag und Bekanntmachung des Hinweises auf die Patenterteilung: **23.10.1996**
(21) Anmeldenummer: 92810080.9
(22) Anmeldetag: 05.02.1992
(51) Int. Cl.: G08B 13/24

(54) **Deaktivierungsvorrichtung für Resonanzetiketten**
Deactivating device for resonance tags
Dispositif pour la déactivation d'étiquettes résonantes

(30) Priorität: 12.02.1991 CH 434/91
(43) Veröffentlichungstag der Anmeldung: 19.08.1992
(73) Patentinhaber: Actron Entwicklungs AG, CH-6343 Rotkreuz (CH)
(72) Erfinder: Müller, Philipp, CH-8606 Greifensee (CH); Wacker, Alain, CH-8245 Feuerthalen (CH)
(74) Vertreter: Lauer, Joachim, Dr.

(56) Entgegenhaltungen:
- EP-A- 0 287 905
- WO-A-90/05968

## Beschreibung

### Technisches Gebiet

Die vorliegende Erfindung betrifft als Teil einer elektronischen Warendiebstahls-Sicherungsanlage eine mit einer Sendeantenne und einer Empfangsantenne versehene Vorrichtung zur Deaktivierung von mit einem aufgedruckten Strichcode versehenen Resonanzetiketten zur Verwendung in baulicher Kombination mit einem opto-elektronischen Strichcode-Handlesegerät. Durch die genannte Kombination können an der Kasse von Geschäften an den Waren angebrachte und mit einem Strichcode versehene elektronische Resonanzetiketten in einem Vorgang zeitgleich mit der Erfassung der strichcodierten Daten deaktiviert werden.

### Stand der Technik

Eine Deaktivierungsvorrichtung der eingangs genannten Art ist bereits bekannt aus der WO 90/05968. Bei der bekannten Vorrichtung sind die Sende- und die Empfangsantenne im Gehäuse eines pistolenartigen Strichcode-Handlesegerätes baulich integriert. Sie sind als Luftspulen ausgebildet und im vorderen Teil des Handlesegerätes unmittelbar hintereinander angeordnet. Mit ihren Windungen umschlingen sie den optischen Strahlengang der Strichcode-Lesevorrichtung. Desweiteren ist noch ein mit den Antennen verbundener sogenannter Anpassungsschaltkreis im gleichen Gehäuse integriert. Zwischen diesem Anpassungsschaltkreis und einer externen ortsfesten Steuereinheit werden radiofrequente Signale über ein abgeschirmtes mehradriges Kabel übertragen. Über das gleiche Kabel werden auch radiofrequente Signale der Strichcode-Lesevorrichtung übertragen.

Zwischen den hochfrequenten Signalen der Deaktivierungsvorrichtung und der Strichcode-Lesevorrichtung besteht grundsätzlich das Problem von unerwünschten Interferenzen. Zur deren Vermeidung sind bei der vorrichtung gemäss der WO 90/05968 besondere, allerdings nicht näher beschriebene konstruktive und schaltungstechnische Massnahmen sowie Abschirmmassnahmen vorgesehen.

Wegen der durch ihren Einbau in das Gehäuse des Strichcodes-Handlesegerätes begrenzten Grösse der Antennen, ist die Reichweite der bekannten Deaktivierungsvorrichtung recht beschränkt. Die Deaktivierung funktioniert nur, wenn das Handlesegerät sehr nahe an die jeweilige Etikette herangeführt wird. Die Reichweite ist insofern verbesserungsbedürftig. Sie durch Steigerung der vermittels der Sendeantenne abgestrahlten Intensität des elektromagnetischen Feldes zu verbessern, ist u.a. wegen der genannten Interferenzprobleme nicht ohne weiteres möglich. Eine Erhöhung der Feldintensität könnte auch zu einer Beeinträchtigung der Funktion der Elektronik anderer, in der Nähe eingesetzter Geräte (z.B. Kassasysteme) führen.

Das Gehäuse des aus der WO 90/05968 bekannten Strichcode-Handlesegerätes ist im Vergleich zu modernen Geräten recht gross. In modernen Strichcode-Handlesegeräten ist für den zusätzlichen Einbau von Bauteilen, die für die Deaktivierung von Resonanzetiketten erforderlich sind, meist kein oder nur sehr wenig Platz mehr. Ein nachträglicher Einbau solcher Elemente ist dadurch schwierig bis unmöglich. Es müssen deshalb spezielle Handlesegeräte mit speziellen Gehäusen konstruiert werden.

Die Deaktivierungsvorrichtung gemäss der WO 90/05968 arbeitet kontinuierlich. d.h. dass das über die Sendeantenne ausgestrahlte elektromagnetische Feld zu jedem Zeitpunkt eine bestimmte Frequenz hat. Diese Frequenz ist allerdings nicht fest, sondern wird über einen bestimmten Frequenzbereich gewobbelt, welcher die Resonanzfrequenz der Resonanzetikette enthält. Durch das Wobbeln ist es möglich, die jeweilige Resonanzfrequenz der jeweils zu deteaktivierenden Etikette in einem ersten Schritt zu detektieren, um sie anschliessend, in einem nachfolgenden zweiten Schritt, mit einem elektromagnetischen Feld genau dieser Frequenz zu deaktivieren.

Aus der EP 0287 905 ist eine Deaktivierungsvorrichtung bekannt, welche ebenfalls eine Sende- und eine Empfangsantenne aufweist. Im Unterschied zu der aus der WO 90/05968 bekannten Vorrichtung arbeit diese jedoch gepulst, d.h. dass ein Nadelimpuls zur Dektivierung der Resonanzetikette verwendet wird. Es besteht hierdurch keine Möglichkeit der Detektion der jeweiligen Resonanzfrequenz der jeweils zu deaktivierenden Etikette.

### Darstellung der Erfindung

Es ist Aufgabe der vorliegenden Erfindung, eine Vorrichtung der eingangs genannten Art anzugeben, welche in baulicher Kombination mit einer Vielzahl verschiedenster handelsüblicher Strichcode-Handlesegeräte ohne spezielle Anpassungsmassnahmen und ohne Interferenzprobleme verwendbar ist. Die vorrichtung soll klein und kostengünstig sein und eine verbesserte Reichweite aufweisen.

Diese Aufgabe wird erfindungsgemäss gelöst durch eine Vorrichtung mit den Merkmalen des Patentanspruchs 1.

Die erfindungsgemässe Vorrichtung ist demnach dadurch gekennzeichnet, dass die Antennen in einem aussenseitig am vorderen Ende des Strichcode-Handlesegeräts befestigbaren Gehäuse angeordnet und als Ferrit-Antennen ausgebildet sind.

Durch die Unterbringung der Antennen sowie vorzugsweise weiterer baulicher Elemente der Deaktivierungsvorrichtung in einem separaten Gehäuse kann die Deaktivierungsvorrichtung praktisch in Kombination mit jedem beliebigen Strichcode-Handlesegerät verwendet werden, ohne dass an diesem irgendwelche Veränderungen oder Anpassungsmassnahmen vorgenommen werden müssen. Das Abschirmen zur Vermeidung von Interferenzen ist sehr einfach. Möglich wird die bauliche Anordnung der Antennen in einem separaten Gehäuse vor allem durch ihre Ausbildung als Ferritantennen. Sie können dadurch einerseits sehr viel kleiner als Luftspulen ausgebildet werden. Zum Anderen ergibt sich eine sehr effektive Richtwirkung für das abgestrahlte elektromagnetische Feld und dadurch eine verbesserte Reichweite für die Deaktivierung.

Vorteilhafte Ausgestaltungen der Erfindung sind in den abhängigen Ansprüchen gekennzeichnet.

### Kurze Beschreibung der Zeichnungen

Im folgenden wird ein Ausführungsbeispiel der Erfindung unter Bezugnahme auf die Zeichnungen erläutert. Es zeigt:
- Fig. 1: ein Strichcode-Handlesegerät mit einem aussenseitig an ihm befestigten Sende- und Empfangskopf einer erfindungsgemässen Dekativierungsvorrichtung,
- Fig. 2: den Sende- und Empfangskopf von Fig. 1, teilweise aufgeschnitten, und
- Fig. 3: ein Blockdiagramm der erfindungsgemässen Deaktivierungsvorrichtung.

In den Figuren sind gleiche Teile mit denselben Bezugszeichen versehen.

### Weg zur Ausführung der Erfindung

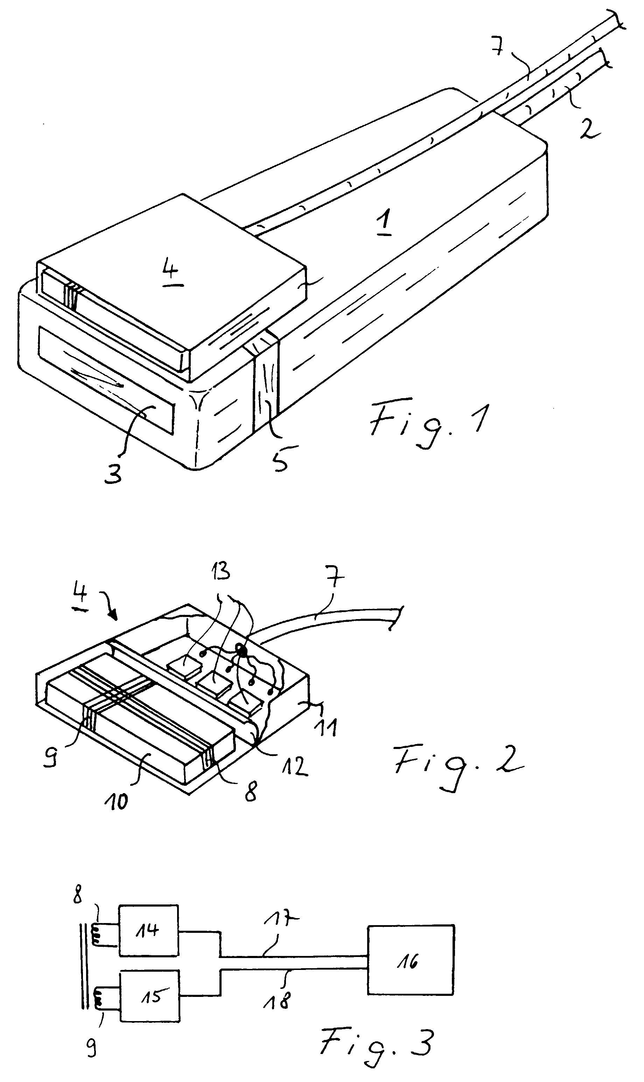

In Fig. 1 ist mit 1 ein Strichcode-Handlesegerät bezeichnet. Über ein Kabel 2 ist dieses beispielsweise mit einer nicht dargestellten elektronischen Registrierkasse verbunden. Auf seiner vorderen Stirnseite weist es ein Fenster 3 auf, durch welches die Strichcode-Abtastung z.B. mit einem Laserstrahl erfolgt. Das Strichcode-Handlesegerät kann von üblicher Ausbildung sein und braucht deshalb auch hier nicht weiter beschrieben zu werden.

Unten sowie aussenseitig an dem Strichcode-Handlesegerät ist ein Sende- und Empfangskopf 4 einer Deaktivierungsvorrichtung befestigt. Der Sende- und Empfangskopf kann, wie in Fig, 1 gezeigt, mittels eines Bandes 5 an dem Strichcode-Handlesegerät, jedoch auch auf jede andere geeignete Art an diesem befestigt sein. Über ein mehradriges Anschlusskabel 7 ist der Sende- und Empfangskopf 4 mit einer ortsfesten, lediglich in Fig. 3 dargestellten und mit 16 bezeichneten Basiseinheit verbunden.

Der Sende- und Empfangskopf 4 weist eine Sendeantenne 8 und eine Empfangsantenne 9 auf. Diese sind als Ferritantennen ausgebildet, wobei die Spulenwicklungen beider Antennen auf einem einzigen, flachen Ferritkern, senkrecht zueinander aufgewickelt sind. Die senkrechte Anordnung der beiden Antennenwicklungen zueinander dient zu ihrer gegenseitigen Entkopplung. Der mit den Antennenwicklungen versehene Ferritkern 10 ist im vorderen Teil eines flachen Gehäuses 11 angeordnet. Die vordere Stirnseite des Gehäuses 11 ist entweder, wie in Fig. 1 dargestellt, offen oder allenfalls mit einem für radiofrequente elektromagnetische Wellen durchlässigen Material verschlossen. Der übrige Teil des Gehäuses 11 besteht dagegen vorzugsweise, zumindest jedoch auf seiner dem Strichcode-Handlesegerät zugewandeten Unterseite, aus einem radiofrequente elektromagnetische Wellen abschirmenden Material.

In Fig. 2, in welcher der Sende- und Empfangskopf 4 mit einem teilweise aufgeschnittenen Gehäuse 11 dargestellt ist, ist zu erkennen, dass im rückwärtigen Teil des Gehäuses 11 noch weitere, mit 13 bezeichnete Bauelemente angeordnet sind. Die Bauteile 13 sind von den Antennen 9 und 10 durch eine Abschirmung 12 getrennt. Die elektronischen Bauteile 13 (es sind in Fig. 2 lediglich beispielhaft drei Bauelemente 13 dargestellt, wobei dieser Anzahl keinerlei Bedeutung zukommt) bilden einerseits einen Nadelimpulse erzeugenden Impulsgenerator für die Sendeantenne 8 und andererseits eine der Empfangsantenne 9 nachgeschaltete Erkennungsschaltung für nicht deaktivierte, zum Schwingen angeregte Resonanzetiketten. In Fig. 3 ist der Impulsgenerator mit 14 und die Erkennungsschaltung mit 15 bezeichnet.

Der Impulsgenerator 14 und die Erkennungsschaltung 15 sind über das mehradrige Anschlusskabel 7 mit der bereits erwähnten ortsfesten Basiseinheit 16 verbunden. Die Basiseinheit liefert über in Fig. 3 nicht dargestellte Leitungen die für den Betrieb des Impulsgenerators 14 und der Erkennungsschaltung 15 erforderlichen Versorgungsspannungen. Diese betragen für den Impulsgenerator typischerweise etwa 400 Volt, und für die Erkennungsschaltung etwa 5 Volt (Gleichspannung). Die Basiseinheit 16 liefert weiter über eine in Fig. 3 mit 17 bezeichnete Leitung ein Taktsignal für den Impulsgenerator. Die typische Frequenz dieses Taktsignals beträgt etwa 20 Hz.

Schliesslich dient die in Fig. 3 mit 18 bezeichnete Leitung zur Übertragung eines logischen Signals (oder eines binären Signals) an die Basiseinheit, welches von der Erkennungsschaltung 15 bei Erkennen einer schwingenden Resonanzetikette erzeugt wird (eine schwingende Resonanzetikette wird immer dann detektiert, wenn eine versuchte Deaktivierung nicht zum Erfolg geführt hat).

Im Prinzip kann die gesamte, die beiden Antennen 8 und 9, den Impulsgenerator 14, die Erkennungsschaltung 15 sowie die Basiseinheit 16 umfassende Anordnung entsprechend derjenigen ausgebildet sein und betrieben werden, wie sie in der eingangs bereits erwähnten EP-A1 0 287 905 ausführlich beschrieben ist. Was den Impulsgenerator anbetrifft, so kann dieser im wesentlichen aus einem Kondensator in Reihe mit einem Thyristor sowie der Sendeantenne 8 als Induktivität aufgebaut sein. Der Thyristor sollte zur Erzeugung des gewünschten Nadelimpulses einen möglichst ausgeprägten sogenannten Snapp-Off-Effekt aufweisen. Das von der Basiseinheit erzeugte Taktsignal dient dann zur Zündung des Thyristors.

Nachdem über das Anschlusskabel 7 keine hochfrequenten Signale übertragen werden, braucht dieses mit keiner Abschirmung versehen zu werden. Von dem Anschlusskabel 7 können daher praktisch keine Störungen in die Umgebung ausgehen.

## Patentansprüche

1. Vorrichtung zur Deaktivierung von mit einem Strichcode versehenen Resonanzetiketten mit einer Sendeantenne (8) und einer Empfangsantenne (9) zur Verwendung in baulicher Kombination mit einem optoelektronischen Strichcode Handlesegerät (8), welches ein erstes Gehäuse aufweist, dadurch gekennzeichnet, dass die Antennen (8,9) in einem aussenseitig am vorderen Ende des Gehäuses des Strichcode-Handlesegerätes (1) befestigbaren weiteren Gehäuse (11) angeordnet und als Ferrit-Antennen ausgebildet sind, wobei die Spulenwicklungen der Sende- (8) und der Empfangsantenne (9) senkrecht zueinander auf einen einzigen flachen Ferritkern (10) aufgewickelt sind.

2. Vorrichtung nach Anspruch 1, dadurch gekennzeichnet, dass die Empfangsantenne (9) senkrecht zur vorderen Stirnseite des weiteren Gehäuses (11) auf den Ferritkern (10) gewickelt ist und zwar seitlich versetzt gegenüber dessen Mitte.

3. Vorrichtung nach einem der Ansprüche 1 oder 2, dadurch gekennzeichnet, dass das Gehäuse (11) zumindest einseitig, zum Strichcode-Handlesegerät (1) hin, mit einer Abschirmung gegen radiofrequente elektromagnetische Wellen versehen ist.

4. Vorrichtung nach einem der Ansprüche 1 bis 3, dadurch gekennzeichnet, dass die Sendeantenne (8) als Induktivität in den Kreis eines Nadelimpulse erzeugenden Impulsgenerators (14) geschaltet ist.

5. Vorrichtung nach Anspruch 4, dadurch gekennzeichnet, dass auch der Impulsgenerator (14) in dem Gehäuse (11) angeordnet ist.

6. Vorrichtung nach einem der Ansprüche 1 bis 5, dadurch gekennzeichnet, dass der Empfangsantenne (9) eine Erkennungsschaltung (15) für nicht deaktivierte, zum Schwingen angeregte Resonanzetiketten nachgeordnet ist, welche bei Erkennen einer schwingenden Resonanzetikette ein logisches Signal erzeugt.

7. Vorrichtung nach Anspruch 6, dadurch gekennzeichnet, dass die Erkennungsschaltung (15) ebenfalls in dem Gehäuse (11) angeordnet ist.

8. Vorrichtung nach einem der Ansprüche 1 bis 7, dadurch gekennzeichnet, dass die im Gehäuse ( 11) angeordneten Bauteile über ein separates, mehradriges Anschlusskabel (7) mit einer ortsfesten Basiseinheit (16) verbunden sind.

9. Vorrichtung nach Anspruch 8, dadurch gekennzeichnet, dass das Anschlusskabel (7) keine für die Übertragung von radiofrequenten Signalen speziell ausgebildeten Leitungen umfasst und auch mit keiner Abschirmung gegen radiofrequente elektromagnetische Wellen versehen ist.

## Claims

1. Device for deactivating resonance labels provided with a bar code, having a transmitting antenna (8) and a receiving antenna (9) for use in a structural combination with an optoelectronic hand-held bar code reader (8), which bar code reader has a first housing, characterized in that the antennas (8, 9) are arranged in a further housing (11) which can be fastened on the outside to the front end of the housing of the hand-held bar code reader (1) and are designed as ferrite antennas, the coil windings of the transmitting (8) and the receiving (9) antennas being wound at right angles to each other on a single flat ferrite core (10).

2. Device according to Claim 1, characterized in that the receiving antenna (9) is wound onto the ferrite core (10) at right angles to the front end of the further housing (11), to be precise offset laterally with respect to its centre.

3. Device according to either of Claims 1 or 2, characterized in that the housing (11) is provided on at least one side, facing the hand-held bar code reader (1), with screening against radio-frequency electromagnetic waves.

4. Device according to one of Claims 1 to 3, characterized in that the transmitting antenna (8) is connected as an inductance into the circuit of a pulse generator (14) generating needle pulses.

5. Device according to Claim 4, characterized in that the pulse generator (14) is also arranged in the housing (11).

6. Device according to one of Claims 1 to 5, characterized in that the receiving antenna (9) has arranged downstream thereof a detection circuit (15) for non-deactivated resonance labels which have been stimulated into oscillation, the said circuit generating a logic signal upon detecting an oscillating resonance label.

7. Device according to Claim 6, characterized in that the detection circuit (15) is likewise arranged in the housing (11).

8. Device according to one of Claims 1 to 7, characterized in that the components which are arranged in the housing (11) are connected to a stationary base unit (16) via a separate, multiway connecting cable (7).

9. Device according to Claim 8, characterized in that the connecting cable (7) contains no lines specifically designed for the transmission of radio-frequency signals and is also not provided with screening against radio-frequency electromagnetic waves.

## Revendications

1. Dispositif pour désactiver des étiquettes résonantes pourvues d'un code barres, avec une antenne émettrice (8) et une antenne réceptrice (9), à utiliser en structure combinée avec un appareil manuel de lecture opto-électronique des codes barres (8), qui présente un premier boîtier, caractérisé en ce que les antennes (8, 9) sont disposées dans un autre boîtier (11) à fixer extérieurement à l'extrémité avant de l'appareil manuel de lecture des codes barres (1) et sont constituées par des antennes ferrites, dans lequel les enroulements de l'antenne émettrice (8) et de l'antenne réceptrice (9) sont bobinés perpendiculairement l'un à l'autre sur un seul noyau de ferrite plat (10).

2. Dispositif suivant la revendication 1, caractérisé en ce que l'antenne réceptrice (9) est bobinée sur le noyau de ferrite (10) perpendiculairement à la face avant de l'autre boîtier (11) et en fait déportée latéralement par rapport au milieu de celui-ci.

3. Dispositif suivant l'une quelconque des revendications 1 ou 2, caractérisé en ce que le boîtier (11) est pourvu, au moins sur un côté, vers l'appareil manuel de lecture de codes barres (1), d'un blindage contre les ondes électromagnétiques à fréquence radio.

4. Dispositif suivant l'une quelconque des revendications 1 à 3, caractérisé en ce que l'antenne émettrice (8) est montée comme élément inductif dans le circuit d'un générateur d'impulsions (14) produisant des impulsions de pointe.

5. Dispositif suivant la revendication 4, caractérisé en ce que le générateur d'impulsions (14) est également disposé dans le boîtier (11).

6. Dispositif suivant l'une quelconque des revendications 1 à 5, caractérisé en ce que l'antenne réceptrice (9) est suivie par un circuit de reconnaissance (15) pour les étiquettes résonantes non désactivées, déclenchant une vibration, qui produit un signal logique lors de la reconnaissance d'une étiquette résonante qui vibre.

7. Dispositif suivant la revendication 6, caractérisé en ce que le circuit de reconnaissance (15) est également disposé dans le boîtier (11).

8. Dispositif suivant l'une quelconque des revendications 1 à 7, caractérisé en ce que les composants disposés dans le boîtier (11) sont raccordés à une unité de base fixe (16) au moyen d'un câble de raccordement multibrins séparé (7).

9. Dispositif suivant la revendication 8, caractérisé en ce que le câble de raccordement (7) ne comprend pas de ligne spécifiquement conçue pour la transmission de signaux à fréquence radio et n'est également pourvu d'aucun blindage contre les ondes électromagnétiques à fréquence radio.
